# EUROPEAN PATENT SPECIFICATION

(11) **EP 4 071 006 B1**
(45) Date of publication and mention of the grant of the patent: **04.06.2025**
(21) Application number: 22162617.9
(22) Date of filing: 17.03.2022
(51) Int. Cl.: B60S 1/38, B60S 1/40

(54) **HOLDER FOR WIPER ARM, WIPER ASSEMBLY AND MOTOR VEHICLE**
HALTER FÜR WISCHERARM, WISCHERANLAGE UND KRAFTFAHRZEUG
SUPPORT DE BRAS D'ESSUIE-GLACE, ENSEMBLE ESSUIE-GLACE ET VÉHICULE À MOTEUR

(30) Priority: 08.04.2021 CN 202110376669
(43) Date of publication of application: 12.10.2022
(73) Proprietor: Taixiang Vehicle Replace Parts (Shenzhen) Co. Ltd., Shenzhen 518117 (CN)
(72) Inventor: Zhang, Jian, Shenzhen, Guangdong, 518117 (CN); PEI, Chuangchuang, Shenzhen, Guangdong, 518117 (CN)

(56) References cited:
- EP-A2- 2 179 901
- WO-A1-2007/049923
- CN-A- 109 703 522
- DE-A1- 102017 219 210
- US-A- 6 161 248
- US-A1- 2009 007 364
- US-A1- 2013 239 354

## Description

### Technical field

The present invention relates to the field of motor vehicle fittings, in particular to a holder for a wiper arm, a wiper assembly and a motor vehicle.

### Background art

As economies have rapidly developed and major advances have been made in technology, people have been demanding noticeably more in terms of quality of life. Compared with the past era of pedestrians and bicycles, motor vehicles appear to have become an indispensable means of transport in the lives of the people of today. In an era when motor vehicles are ubiquitous, people's demands in relation to motor vehicles are not limited to fuel economy and vehicle comfort; driving safety has also become a primary factor to be considered when purchasing a vehicle.

In terms of driving a motor vehicle, rainy and snowy weather not only cause slippery roads and increased braking distance; vision is the chief problem. When driving in rainy and snowy weather, rain and snow generally stick to the motor vehicle's front windscreen, rear windscreen, side windows and rear view mirrors, seriously affecting the driver's vision, and easily causing misjudgements which in turn cause accidents. Windscreen wipers are an important safety fitting on a motor vehicle, being able to effectively clear rain, snow and dirt from the motor vehicle's windscreen, to give the driver a clear field of view, thus ensuring driving safety. At present, in a wiper arm connection structure in the prior art, a holder for a wiper arm is only suitable for a flat wiper arm, by connecting the holder to an adapter, and then connecting the wiper arm to the holder. In the case of specific types of wiper arm, for example types in which an end of the wiper arm has an arc-shaped groove (Roc-lock 3 series wiper arms), interference easily occurs between the wiper arm and the holder structure during installation, thus preventing smooth installation.

Thus, a new type of holder for a wiper arm is urgently needed.

DE 10 2017 219 210 A1 discloses a wiper blade, in particular for a windshield of a motor vehicle. The wiper blade comprises a wiper strip and an adapter which comprises a first clamping part, a second clamping part and a retaining element having means for attachment to a wiper arm.

### Summary of the invention

An object of the present invention is to solve or mitigate to a certain degree the technical problem mentioned above.

According to a first aspect of the present invention, a holder for a wiper arm is provided, comprising:
a body, having two opposite sidewalls extending in the longitudinal direction of the wiper arm, the bottom of the body being provided with a dovetail slot configured to match a protrusion of an adapter;
a fixing pin, arranged between the two opposite sidewalls of the body; and
a first locking pin and a second locking pin, arranged in the two opposite sidewalls of the body respectively, the first locking pin and the second locking pin being equidistant from the fixing pin. Two notches arranged side by side are provided in each of the two opposite sidewalls of the body of the holder.

Optionally, in the holder as described above, the first locking pin and the second locking pin are located at the same height.

Optionally, in the holder as described above, the range of distances from the first locking pin and the second locking pin to the fixing pin is 2.5 - 3 mm.

Optionally, in the holder as described above, respective ends of the first locking pin and the second locking pin are each provided with a bevelled guide face.

Optionally, in the holder as described above, the first locking pin and the second locking pin are the same size.

According to a second aspect of the present invention, a wiper assembly is provided, comprising the holder described above, the wiper assembly further comprising:
an adapter, fixed to a wiper blade and provided with a protrusion configured to match the dovetail slot of the holder; and
a wiper arm, an end thereof being rotatable around the fixing pin of the holder,
wherein the end of the wiper arm is provided with arc-shaped grooves, and when the end of the wiper arm rotates around the fixing pin of the holder, the first locking pin and the second locking pin are engaged in the arc-shaped grooves.

Optionally, in the wiper assembly as described above, the end of the wiper arm is provided with a slot matched to the shape of the fixing pin of the holder.

Optionally, in the wiper assembly as described above, the slot of the wiper arm has an elliptical cross section.

According to a third aspect of the present invention, a motor vehicle is provided, comprising the wiper assembly described above.

### Brief description of the drawings

The disclosed content of the present invention will become easier to understand with reference to the drawings. Those skilled in the art will readily appreciate that these drawings are merely intended for explanatory purposes, and are not intended to limit the scope of protection of the present invention. In addition, similar numerals are used to indicate similar components in the drawings, wherein:
Fig. 1 shows demonstratively the structure of a holder for a wiper arm disclosed in accordance with the present invention.
Fig. 2 shows demonstratively the structure of the holder and an adapter disclosed in accordance with the present invention, viewed from below.
Fig. 3 shows demonstratively part of the structure of a wiper arm disclosed in accordance with the present invention.
Fig. 4 shows demonstratively the structure of a wiper assembly disclosed in accordance with the present invention, with the wiper arm omitted.
Fig. 5 shows demonstratively the structure of the wiper assembly disclosed in accordance with the present invention, when installing the wiper arm.
Fig. 6 shows demonstratively the structure of the wiper assembly disclosed in accordance with the present invention, when installation of the wiper arm is complete.

### Detailed description of embodiments

To make the abovementioned object, features and advantages of the present invention more obvious and easy to understand, specific embodiments of the present invention are explained in detail below with reference to the drawings. First of all, it must be explained that orientational terms mentioned or possibly mentioned herein, such as up, down, left, right, front, back, inside, outside, top and bottom, are defined in relation to the structures shown in the drawings, and are relative concepts, and might therefore vary with position and state of use. Thus, these or other orientational terms should not be interpreted as being restrictive terms.

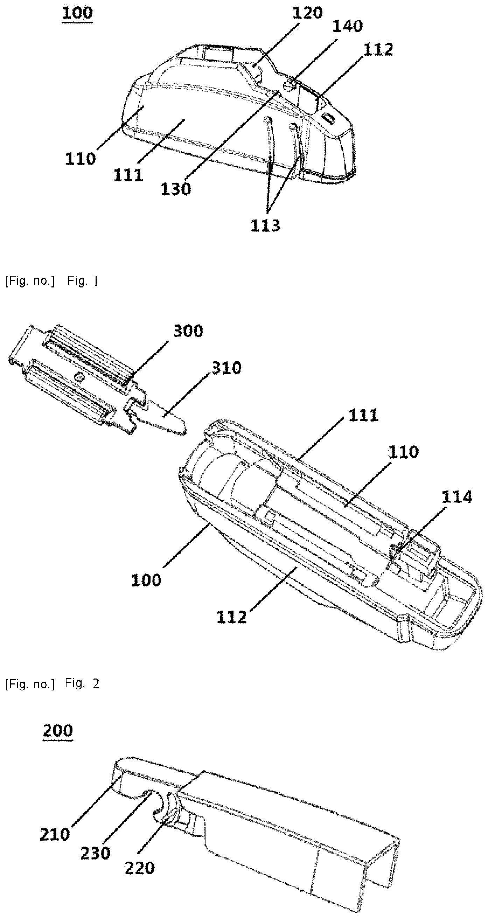

Fig. 1 shows a schematic structural drawing of a holder for a wiper arm disclosed in accordance with the present invention. Referring to Fig. 1, it can be seen that a holder 100 for a wiper arm comprises a body 110, a fixing pin 120, a first locking pin 130 and a second locking pin 140, etc. The body 110 has two opposite sidewalls 111, 112 extending in the longitudinal direction of a wiper arm 200. It can be seen in Fig. 2 that the bottom of the body 110 is also provided with a dovetail slot 114, which is configured to match a protrusion 310 of an adapter 300, to enable the holder 100 to be push-fitted onto the adapter 300. The fixing pin 120 is arranged between the two opposite sidewalls 111, 112 of the body 110. The first locking pin 130 and the second locking pin 140 are arranged in the two opposite sidewalls 111, 112 of the body 110 respectively, and the first locking pin 130 and the second locking pin 140 are equidistant from the fixing pin 120. It must be explained that in this text, "longitudinal" means the length direction of the wiper arm 200. In the holder for a wiper arm according to the present invention, the non-interfering structure of the first locking pin 130 and the second locking pin 140 makes the mounting and removal of Roc-lock 3 series wiper arms very easy.

In some embodiments of the present invention, the first locking pin 130 and the second locking pin 140 are located at the same height, as shown in Fig. 1.

In some embodiments of the present invention, the range of distances from the first locking pin 130 and the second locking pin 140 to the fixing pin 120 may be designed to be 2.5 - 3 mm.

In some embodiments of the present invention, respective ends of the first locking pin 130 and second locking pin 140 of the holder 100 are each provided with a bevelled guide face (see Fig. 1), so as to facilitate the mounting of the wiper arm 200.

In some embodiments of the present invention, the first locking pin 130 and the second locking pin 140 may be designed to be the same size.

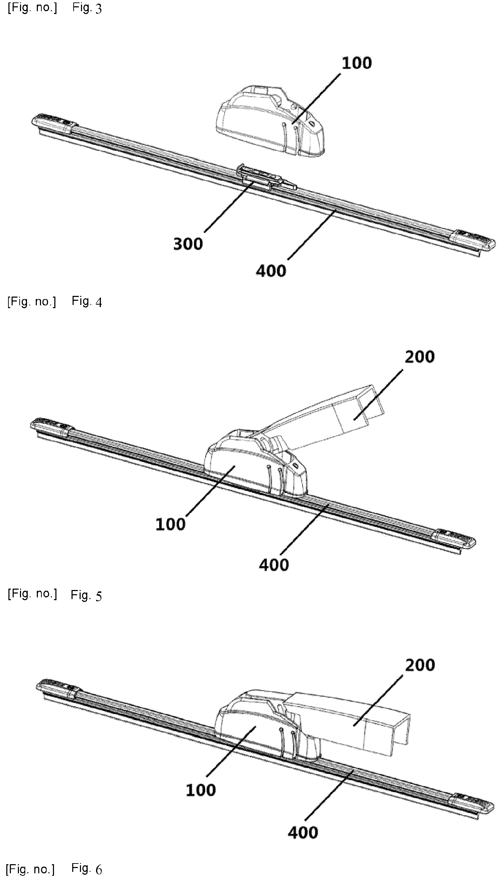

Figs. 4 - 6 show schematic structural drawings of a wiper assembly disclosed in accordance with the present invention. Referring to Figs. 4 - 6, it can be seen that the wiper assembly comprises the holder 100, the wiper arm 200, the adapter 300 and a wiper blade 400, wherein the adapter 300 is fixed to the wiper blade 400, and is provided with the protrusion 310 matched to the dovetail slot 114 of the holder 100. An end 210 of the wiper arm 200 is rotatable around the fixing pin 120 of the holder 100. The end 210 of the wiper arm 200 is provided with arc-shaped grooves 220 (see Fig. 3); when the end 210 of the wiper arm 200 rotates around the fixing pin 120 of the holder 100, the first locking pin 130 and the second locking pin 140 are engaged in the arc-shaped grooves 220, thereby advantageously locking the first locking pin 130 and the second locking pin 140 in the arc-shaped grooves 220.

In some embodiments of the present invention, two notches 113 arranged side by side are provided in each of the two opposite sidewalls 111, 112 of the body 110 of the holder 100. When an operator removes the holder 100 from the adapter 300, he or she need only press a tab formed between the two notches 113 arranged side by side.

In some embodiments of the present invention, the wiper arm 200 is provided with a slot 230 matched to the shape of the fixing pin 120 of the holder 100, thereby making it easier for the end 210 of the wiper arm 200 to pivot around the fixing pin 120.

In some embodiments of the present invention, the slot 230 of the wiper arm 200 has a substantially elliptical cross section, as shown in Fig. 3.

The processes of assembling and disassembling the adapter 300, the wiper arm 200 and the holder 100 for the wiper arm 200 in the wiper assembly are expounded below with reference to Figs. 4 - 6.

In the process of installing the holder 100, the holder 100 is first of all plugged onto the adapter 300 fixed to the wiper blade 400 by mating the protrusion 310 with the dovetail slot 114 (see Fig. 4). The slot 230 of the wiper arm 200 is then aligned with the fixing pin 120 of the holder 100, and the wiper arm 200 is rotated downwards around the fixing pin 120 of the holder 100 (see Fig. 5), thereby engaging the first locking pin 130 and second locking pin 140 of the holder 100 in the arc-shaped grooves 220 of the wiper arm 200, and in turn locking the first locking pin 130 and second locking pin 140 in the arc-shaped grooves 220 respectively, at which time the installation of the wiper arm 200 is complete (see Fig. 6). In the process of removing the holder 100, the wiper arm 200 is rotated upwards around the fixing pin 120 of the holder 100, and the wiper arm 200 is moved away from the fixing pin 120 of the holder 100, thereby disengaging the first locking pin 130 and second locking pin 140 of the holder 100 from the arc-shaped grooves 220 of the wiper arm 200, at which time the removal of the wiper arm 200 is complete.

The present invention also provides a motor vehicle. The motor vehicle comprises the wiper assembly described above. The motor vehicle may be various types of vehicle such as a private car, a taxi, a bus, a medium-sized coach or a large coach.

In summary, the holder for a wiper arm according to the present invention has a simple, optimized structural design, so that in addition to flat wiper arms, other types of wiper arms (e.g. Roc-lock 3 series wiper arms) can also be fitted to the holder, thereby achieving a good connection result and a good wiping/cleaning effect, and thus effectively extending the service life of the wiper. Thus, it is strongly recommended that this holder for a wiper arm be used in a wiper assembly, and it is recommended that the use of this wiper assembly in motor vehicles be popularized.

A number of specific embodiments have been set out above to expound in detail the holder for a wiper arm, the wiper assembly and the motor vehicle according to the present invention. These examples merely serve the purpose of explaining the principles of the present invention and embodiments thereof, without restricting the present invention. Those skilled in the art could make various changes and improvements without departing from the scope of the present invention, as defined by the claims. Thus, all equivalent technical solutions should be included in the scope of the present invention as defined by the claims thereof.

## Claims

1. Holder (100) for a wiper arm, comprising:
a body (110), having two opposite sidewalls (111, 112) extending in the longitudinal direction of the wiper arm, the bottom of the body (110) being provided with a dovetail slot (114) configured to match a protrusion (310) of an adapter (300);
**characterized in that** the holder (100) further comprises a fixing pin (120), arranged between the two opposite sidewalls (111, 112) of the body (110); and
a first locking pin (130) and a second locking pin (140), arranged in the two opposite sidewalls (111, 112) of the body (110) respectively, the first locking pin (130) and the second locking pin (140) being equidistant from the fixing pin (120),
wherein two notches (113) arranged side by side are provided in each of the two opposite sidewalls (111, 112) of the body (110) of the holder (100).

2. Holder (100) according to Claim 1, **characterized in that** the first locking pin (130) and the second locking pin (140) are located at the same height.

3. Holder (100) according to Claim 1 or 2, **characterized in that** the range of distances from the first locking pin (130) and the second locking pin (140) to the fixing pin (120) is 2.5 - 3 mm.

4. Holder (100) according to Claim 1 or 2, **characterized in that** respective ends of the first locking pin (130) and the second locking pin (140) are each provided with a bevelled guide face.

5. Holder (100) according to Claim 1 or 2, **characterized in that** the first locking pin (130) and the second locking pin (140) are the same size.

6. Wiper assembly, comprising the holder (100) according to any one of Claims 1-5, the wiper assembly further comprising:
an adapter (300), fixed to a wiper blade (400) and provided with a protrusion (310) configured to match the dovetail slot (114) of the holder (100); and
a wiper arm (200), an end (210) thereof being rotatable around the fixing pin (120) of the holder (100),
wherein the end (210) of the wiper arm (200) is provided with arc-shaped grooves (220), and when the end (210) of the wiper arm (200) rotates around the fixing pin (120) of the holder (100), the first locking pin (130) and the second locking pin (140) are engaged in the arc-shaped grooves (220).

7. Wiper assembly according to Claim 6, **characterized in that** the end (210) of the wiper arm (200) is provided with a slot (230) matched to the shape of the fixing pin (120) of the holder (100).

8. Wiper assembly according to Claim 7, **characterized in that** the slot (230) of the wiper arm (200) has an elliptical cross section.

9. Motor vehicle, **characterized by** comprising the wiper assembly according to any one of Claims 6 - 8.

## Patentansprüche

1. Halter (100) für einen Wischerarm, umfassend:
einen Körper (110), der zwei gegenüberliegende Seitenwände (111, 112) aufweist, die sich in der Längsrichtung des Wischerarms erstrecken, wobei der Boden des Körpers (110) mit einem Schwalbenschwanzschlitz (114) versehen ist, der dazu ausgelegt ist, mit einem Vorsprung (310) eines Adapters (300) zusammenzupassen;
**dadurch gekennzeichnet, dass** der Halter (100) ferner einen Fixierstift (120) umfasst, der zwischen den zwei gegenüberliegenden Seitenwänden (111, 112) des Körpers (110) angeordnet ist; und
einen ersten Verriegelungsstift (130) und einen zweiten Verriegelungsstift (140), die jeweils in den zwei gegenüberliegenden Seitenwänden (111, 112) des Körpers (110) angeordnet sind, wobei der erste Verriegelungsstift (130) und der zweite Verriegelungsstift (140) von dem Befestigungsstift (120) äquidistant sind,
wobei zwei nebeneinander angeordnete Kerben (113) in jeder der zwei gegenüberliegenden Seitenwände (111, 112) des Körpers (110) des Halters (100) vorgesehen sind.

2. Halter (100) nach Anspruch 1, **dadurch gekennzeichnet, dass** sich der erste Verriegelungsstift (130) und der zweite Verriegelungsstift (140) auf gleicher Höhe befinden.

3. Halter (100) nach Anspruch 1 oder 2, **dadurch gekennzeichnet, dass** der Entfernungsbereich von dem ersten Verriegelungsstift (130) und dem zweiten Verriegelungsstift (140) zu dem Befestigungsstift (120) 2,5 - 3 mm beträgt.

4. Halter (100) nach Anspruch 1 oder 2, **dadurch gekennzeichnet, dass** die Enden des ersten Verriegelungsstiftes (130) und des zweiten Verriegelungsstiftes (140) jeweils mit einer abgeschrägten Führungsfläche versehen sind.

5. Halter (100) nach Anspruch 1 oder 2, **dadurch gekennzeichnet, dass** der erste Verriegelungsstift (130) und der zweite Verriegelungsstift (140) gleich groß sind.

6. Wischeranordnung, umfassend den Halter (100) nach einem der Ansprüche 1 - 5, wobei die Wischeranordnung ferner umfasst:
einen Adapter (300), der an einem Wischerblatt (400) befestigt und mit einem Vorsprung (310) versehen ist, der dazu ausgelegt ist, mit dem Schwalbenschwanzschlitz (114) des Halters (100) zusammenzupassen; und
einen Wischerarm (200), wobei ein Ende (210) davon um den Befestigungsstift (120) des Halters (100) drehbar ist,
wobei das Ende (210) des Wischerarms (200) mit bogenförmigen Nuten (220) versehen ist, und wenn sich das Ende (210) des Wischerarms (200) um den Befestigungsstift (120) des Halters (100) dreht, der erste Verriegelungsstift (130) und der zweite Verriegelungsstift (140) in die bogenförmigen Nuten (220) eingerastet sind.

7. Wischeranordnung nach Anspruch 6, **dadurch gekennzeichnet, dass** das Ende (210) des Wischerarms (200) mit einem an die Form des Befestigungsstiftes (120) des Halters (100) angepassten Schlitz (230) versehen ist.

8. Wischeranordnung nach Anspruch 7, **dadurch gekennzeichnet, dass** der Schlitz (230) des Wischerarms (200) einen elliptischen Querschnitt aufweist.

9. Kraftfahrzeug, **dadurch gekennzeichnet, dass** es die Wischeranordnung nach einem der Ansprüche 6 - 8 umfasst.

## Revendications

1. Support (100) de bras d'essuie-glace, comprenant :
un corps (110), ayant deux parois latérales (111, 112) opposées s'étendant dans la direction longitudinale du bras d'essuie-glace, la partie inférieure du corps (110) étant pourvue d'une fente en queue-d'aronde (114) conçue pour correspondre à une saillie (310) d'un adaptateur (300) ;
**caractérisé en ce que** le support (100) comprend en outre un axe de fixation (120), disposé entre les deux parois latérales (111, 112) opposées du corps (110) ; et
un premier axe de verrouillage (130) et un second axe de verrouillage (140), disposés respectivement dans les deux parois latérales (111, 112) opposées du corps (110), le premier axe de verrouillage (130) et le second axe de verrouillage (140) étant équidistants de l'axe de fixation (120),
deux encoches (113) disposées côte à côte étant situées dans chacune des deux parois latérales (111, 112) opposées du corps (110) du support (100).

2. Support (100) selon la revendication 1, **caractérisé en ce que** le premier axe de verrouillage (130) et le second axe de verrouillage (140) sont situés à la même hauteur.

3. Support (100) selon la revendication 1 ou 2, **caractérisé en ce que** la plage de distances du premier axe de verrouillage (130) et du second axe de verrouillage (140) à l'axe de fixation (120) est comprise entre 2,5 et 3 mm.

4. Support (100) selon la revendication 1 ou 2, **caractérisé en ce que** les extrémités respectives du premier axe de verrouillage (130) et du second axe de verrouillage (140) sont chacune pourvues d'une face de guidage biseautée.

5. Support (100) selon la revendication 1 ou 2, **caractérisé en ce que** le premier axe de verrouillage (130) et le second axe de verrouillage (140) ont la même taille.

6. Ensemble essuie-glace, comprenant le support (100) selon l'une quelconque des revendications 1 à 5, l'ensemble essuie-glace comprenant en outre :
un adaptateur (300), fixé à un balai d'essuie-glace (400) et pourvu d'une saillie (310) conçue pour correspondre à la fente en queue-d'aronde (114) du support (100) ; et
un bras d'essuie-glace (200), une extrémité (210) de celui-ci pouvant tourner autour de l'axe de fixation (120) du support (100),
l'extrémité (210) du bras d'essuie-glace (200) étant pourvue de rainures en forme d'arc (220), et lorsque l'extrémité (210) du bras d'essuie-glace (200) tourne autour de l'axe de fixation (120) du support (100), le premier axe de verrouillage (130) et le second axe de verrouillage (140) venant en prise avec les rainures en forme d'arc (220).

7. Ensemble essuie-glace selon la revendication 6, **caractérisé en ce que** l'extrémité (210) du bras d'essuie-glace (200) est pourvue d'une fente (230) correspondant à la forme de l'axe de fixation (120) du support (100).

8. Ensemble essuie-glace selon la revendication 7, **caractérisé en ce que** la fente (230) du bras d'essuie-glace (200) a une section transversale elliptique.

9. Véhicule à moteur, **caractérisé en ce qu'**il comprend l'ensemble essuie-glace selon l'une quelconque des revendications 6 à 8.
